# EUROPEAN PATENT SPECIFICATION

(11) **EP 1 264 730 B1**
(45) Date of publication and mention of the grant of the patent: **15.08.2007**
(21) Application number: 02012356.8
(22) Date of filing: 05.06.2002
(51) Int. Cl.: B60Q 1/00

(54) **Head lamp for vehicle**
Fahrzeugscheinwerfer
Phare de véhicule

(30) Priority: 05.06.2001 JP 2001169812
(43) Date of publication of application: 11.12.2002
(73) Proprietor: ICHIKOH INDUSTRIES, LTD., Tokyo 144-0022 (JP)
(72) Inventor: Shirakawa, Kazutaka, Ichikoh Industries, Ltd., Isehara-shi, Kanagawa-ken, 259-1192 (JP)
(74) Representative: Grünecker, Kinkeldey, Stockmair & Schwanhäusser Anwaltssozietät

(56) References cited:
- EP-B- 0 579 184
- DE-U1- 29 809 619
- FR-A- 2 252 533
- FR-A- 2 790 308
- US-A- 2 423 664
- US-A- 5 140 504
- US-A- 5 199 779

## Description

### FIELD OF THE INVENTION

The present invention relates to a head lamp for a vehicle provided with a main bulb and a position bulb. In the specification and claims, such a term "front", "ahead" or "forward" means a forward direction in which the head lamp for a vehicle irradiates a light.

### BACKGROUND OF THE INVENTION

European Patent Laid-Open Publication number EP 0 579 184 relates to a head lamp for a vehicle according to the preamble of claim 1 and further discloses a sub-reflection surface, which is provided in a periphery of a light source section of a position bulb in a portion protruding ahead of the reflection surface.

United States Patent Laid-Open Publication number US 5,140,504 discloses a head lamp for a vehicle corresponding to the preamble of claim 1. Said document further discloses a standing wall, which is provided in a reflector and protrudes ahead of a light source so as to shield the light between a main bulb and the sub reflection surface.

United States Patent Laid-Open Publication number US 5,199,779 discloses a vehicle head lamp comprising a light source covering section, which is plated with aluminium by vacuum deposition.

As a head lamp for a vehicle provided with a main bulb and a position bulb, for example, there is a structure described in Japanese Patent Application Laid-Open No. H10-144103 (hereinafter, referred to as a conventional head lamp for a vehicle).

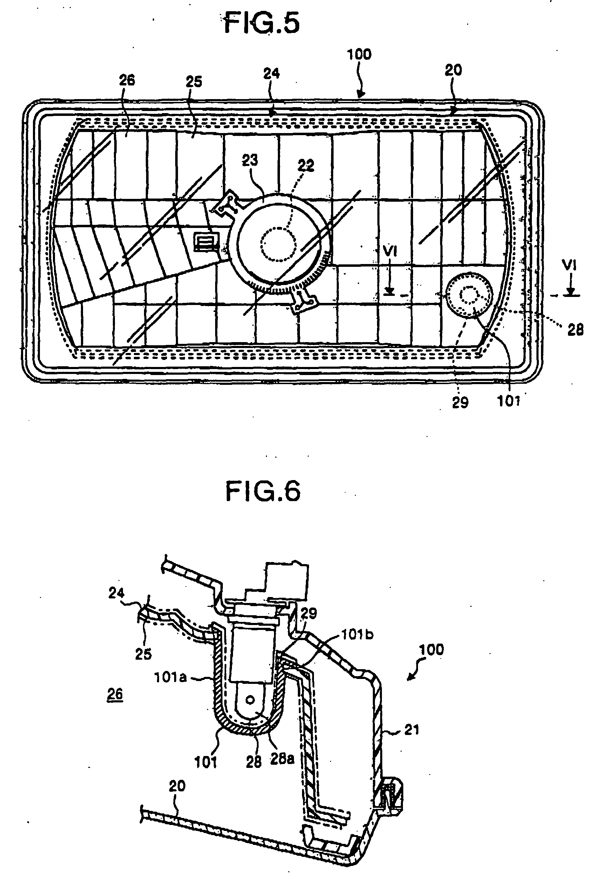

The conventional head lamp for a vehicle will be explained with reference to Figs. 5 to 7.

In the drawings, reference numeral 100 denotes a conventional head lamp for a vehicle. The head lamp 100 for a vehicle corresponds to a head lamp of a reflector movable type, and is constituted by main constituting parts such as a lamp housing 21, a lamp lens 20, a reflector 24, a main bulb 22, a position bulb 28, a shielding member 101 and the like.

A lamp chamber 26 is defined by the lamp housing 21 and the lamp lens 20. The reflector 24, the main bulb 22, the position bulb 28, the shielding member 101 and the like are arranged within the lamp chamber 26.

The main bulb 22 and a shade 23 which prevents a direct light output from the main bulb 22 from passing through the lamp lens 20 to be irradiated to the outside are respectively mounted to the reflector 24. An aluminum vapor deposition process is applied onto a surface of the reflector 24, whereby a reflection surface 25 which reflects the light from the main bulb 22 is formed. The reflector 24 is mounted to the lamp housing 21 in a tiltable manner, that is, in such a manner as to adjust an optical axis of the main bulb 22. The reflection surface 25 of the reflector 24 has a function of controlling a light distribution. On the other hand, the lamp lens 20 is constituted by a plain lens having no light distribution controlling function. A circular opening 29 is provided in a portion positioned at an obliquely lower side from the mounting section of the main bulb 22, in the reflector 24.

The position bulb 28 is provided in the lamp housing 21, and a light source section 28a of the position bulb 28 protrudes into the lamp chamber 26 from the opening 29 and is positioned ahead of the reflection surface 25.

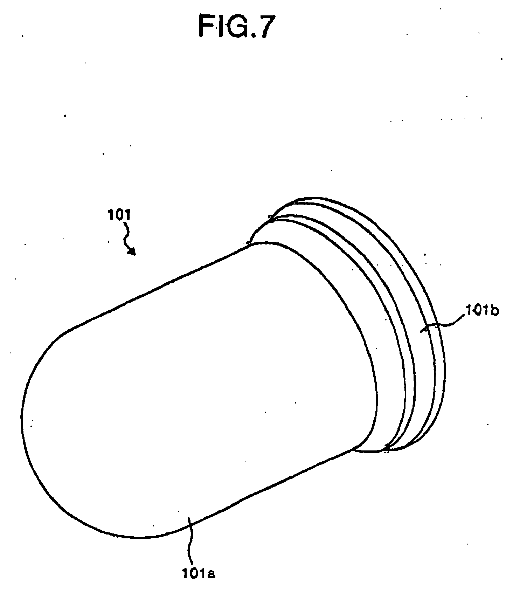

The shielding member 101 constituted as a separate member is mounted to an opening edge of the opening 29. The shielding member 101 has a diameter substantially equal to that of the opening 29, as shown in Fig. 7, and a distal end thereof is constituted by a cap section 101a formed in a hemispherical shape. An annular groove section 101b is formed in a rear end section of the cap section 101a.

As shown in Fig. 6, the shielding member 101 is mounted to the reflector 24 in a state in which the cap section 101a protrudes ahead of the reflection surface 25, by fitting and attaching the annular groove section 101b to the opening edge of the opening 29. Further, the shielding member 101 covers the light source section 28a of the position bulb 28 protruding into the lamp chamber 26 from the opening 20. Further, the shielding member 101 is set to a size by which the shielding member 101 does not interfere with the position bulb 28 even when the reflector 24 is tilted.

The shielding member 101 is formed by a transparent polycarbonate resin material. A half (an aluminum) vapor deposition process is applied to the surface of the shielding member 101. As a result, when observing the head lamp 100 for a vehicle from the front side at the time when the head lamp is not turned off, it is possible to prevent the opening 29 from appearing a bit of black ring shape due to a surface reflection of the shielding member 101. On the other hand, at the time when the head lamp is turned on, the light distribution function as the position bulb 28 is achieved by passing the light output from the position bulb 28.

Therefore, in the conventional head lamp 100 for a vehicle, since it is possible to shield an opening gap between the opening 29 and the position bulb 28, and the position bulb 28 itself, by mounting the shielding member 101 to the reflector 24, it is possible to improve an appearance of the head lamp at the time when the head lamp is turned off.

However, since the conventional head lamp 100 for a vehicle requires the shielding member 101 as the separate member, the number of the parts and the number of assembling steps are increased, and a cost become accordingly expensive.

Since the conventional head lamp 100 for a vehicle is structured such that a whole of the light source section 28a in the position bulb 28 is covered by the shielding member 101, the light output from the light source section 28a of the position bulb 28 is reflected or absorbed at the time of passing through the shielding member 101 so as to be reduced. Accordingly, the conventional head lamp 100 for a vehicle can not obtain a desired brightness, and on the other hand, it is therefore necessary to use the position bulb 28 having a great electric capacity in order to obtain the desired brightness. When using the position bulb 28 having the great electric capacity, there is a possibility that a calorific power becomes high and the shielding member 101 is deteriorated.

### SUMMARY OF THE INVENTION

It is an object of this invention to provide a head lamp for a vehicle which can reduce the number of parts and the number of assembling man steps as to reduce a cost, can obtain a desired brightness without increasing an electric capacity of a position bulb, and can improve an appearance at the time when the head lamp is turned off.

The objective is achieved by a head lamp for a vehicle having the features as specified in claim 1. Preferred embodiments of the head lamp are subject to the dependent claims.

Other objects and features of this invention will become apparent from the following description with reference to the accompanying drawings.

### BRIEF DESCRIPTION OF THE DRAWINGS

Fig. 1 is a front elevational view of a reflector used in a head lamp for a vehicle according to an embodiment of this invention,

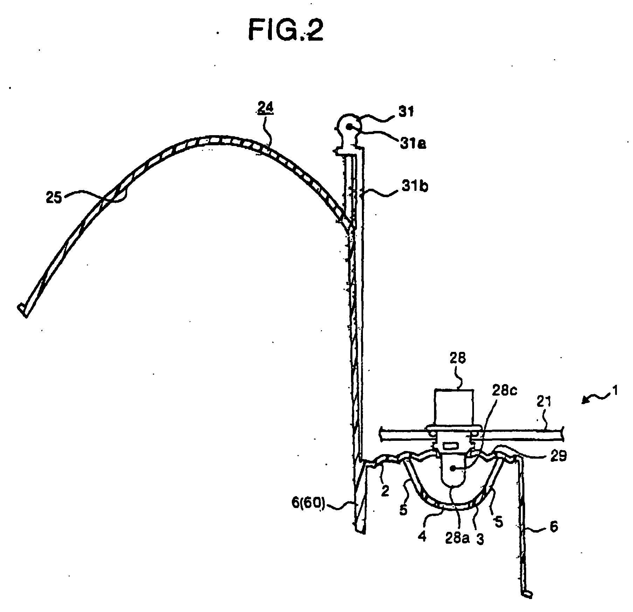

Fig. 2 is a cross sectional view taken along a line II-II in Fig. 1,

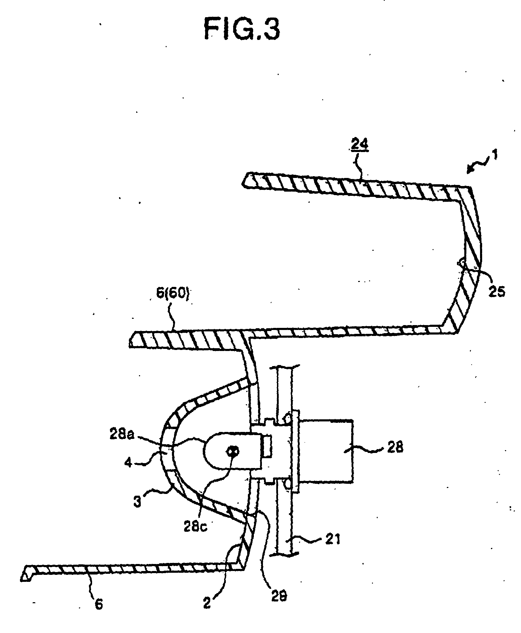

Fig. 3 is a cross sectional view taken along a line III-III in Fig. 1,

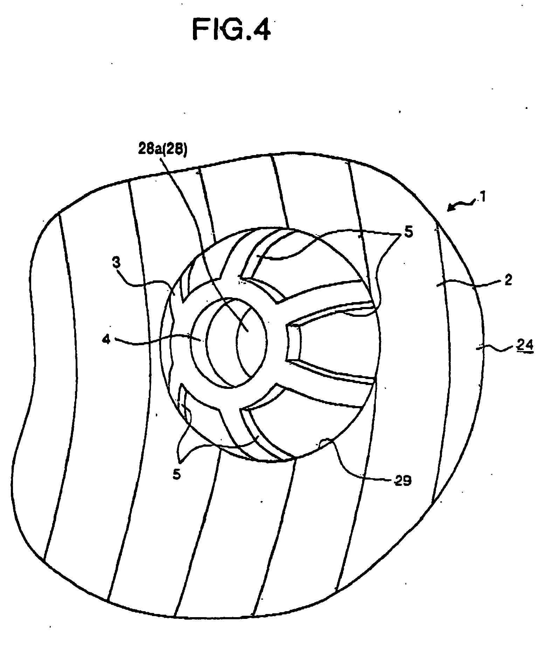

Fig. 4 is a perspective view of a main portion,
Fig. 5 is a front elevational view of a conventional head lamp for a vehicle,
Fig. 6 is a cross sectional view taken along a line VI-VI in Fig. 5, and
Fig. 7 is a perspective view of a shielding member used in the conventional head lamp for a vehicle.

### DETAILED DESCRIPTION

An example of an embodiment of a head lamp for a vehicle according to the present invention will be described with reference to the accompanying drawings. The present invention is not limited by the embodiment. Further, the same reference numerals as those in Figs. 5 to 7 denote the same elements.

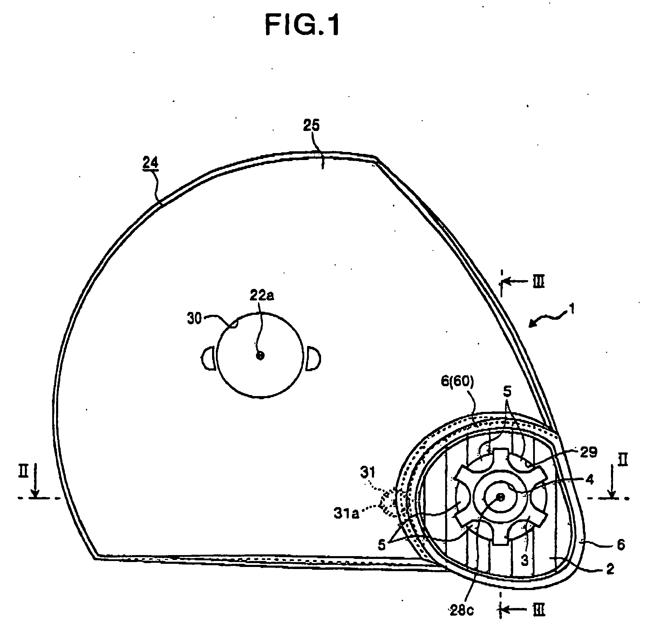

In the drawings, reference numeral 1 denotes a head lamp for a vehicle according to the embodiment of the present invention. A head lamp 1 for a vehicle corresponds to ahead lamp of a reflector movable type, and is constituted by main constituting parts such as a lamp housing 21, a lamp lens, a reflector 24, a main bulb, a position bulb 28, a light source covering section 3 and the like. Illustration of the lamp lens, the main bulb and the like are omitted. Further, in Fig. 1, reference numeral 22a denotes a bulb center of the main bulb, reference numeral 28c denotes a bulb center of the position bulb 28, and reference numeral 30 denotes an attaching hole for the main bulb.

A leg section 31b is integrally extended to a rear side, on a back surface (a surface in an opposite side to the reflection surface 25) of the reflector 24. A pivot section 31 is integrally provided in a distal end of the leg section 31b. The pivot section 31 is fitted to a pivot receiving section (not shown) provided in the lamp housing 21 so as to freely tilt and rotate. Accordingly, the reflector 24 is supported to the lamp housing 21 so as to be capable of adjusting an optical axis of the main bulb. A center 31a of the pivot section 31 corresponds to a supporting point which adjusts the optical axis of the main bulb (aiming).

A sub reflection surface 2 is provided in a portion protruding ahead of the reflection surface 25, in a right obliquely lower corner portion from the attaching hole 30 for the main bulb, on the reflection surface 25 of the reflector 24. The sub reflection surface 2 is provided in a periphery of the light source section 28a in the position bulb 28, and is structured such as to reflect light output from the light source section 28a of the position bulb 28. The sub reflection surface 2 is divided into a plurality of segments in right and left, eight segments in this example. Each of the segments is formed in a cylindrical recess surface.

An opening 29 is provided in a substantially center portion of the sub reflection surface 2 so as to extend therethrough. The opening 29 is formed in a sufficiently larger diameter than the position bulb 28 so as not to interfere with the position bulb 28 at the time of aiming the reflector 24.

The light source covering section 3 is integrally provided in the reflector 24. The light source covering section 3 is formed in a dome shape bulging forward from an opening edge of the opening 29 so as to cover the light source section 28a of the position bulb 28 and the opening 29. Further, the light source covering section 3 is formed with a sufficient space with respect to the position bulb 28 so as not to interfere with the position bulb 28 at the time of aiming the reflector 24, in the same manner as the opening 29. Further, an aluminum vapor deposition process is applied to the surface of the light source covering section 3, in the same manner as that of the reflection surface 25 and the sub reflection surface 2.

Moderate degree of gaps 4 and 5 by which a desired brightness can be obtained are provided in the light source covering section 3. The gaps 4 and 5 are constituted by one front face hole 4 provided in a top portion of the light source covering section 3, a plurality of, six in this example, side face holes 5 provided in a side face portion of the light source covering section 3.

A standing wall 6 is integrally provided in the reflector 24. The standing wall 6 protrudes ahead of the light source covering section 3 in such a manner as to surround the light source covering section 3. Further, the standing wall 6 is formed along an edge of the sub reflection surface 2. Further, a standing wall between the reflection surface 25 and the sub reflection surface 2 in the standing wall 6 corresponds to a standing wall 60 which shields light. The standing wall 60 which shields light is structured such as to shield light between the main bulb and the sub reflection surface 2, and between the position bulb 28 and the reflection surface 25.

Since the head lamp 1 for a vehicle according to the embodiment is structured such that the light source section 28a of the position bulb 28 and the opening 29 are covered by the light source covering section 3, the gap between the opening 29 and the position bulb 28, and the position bulb 28 itself are hard to be visible from the outside, so that it is possible to improve an appearance at the time when the head lamp is turned off.

Since the head lamp 1 for a vehicle according to the embodiment is structured such that the light source covering section 3 is integrally provided in the reflector 24, it is possible to reduce the number of the parts and the number of the assembling steps in comparison with the conventional head lamp 100 for a vehicle using a shielding member 101 constituted by a separate member, and it is possible to reduce the cost correspondingly.

The head lamp 1 for a vehicle according to the embodiment can obtain a desired brightness without increasing the electric capacity of the position bulb 28 at the time when the position bulb 28 is turned on, with the help of the moderate degree of gaps 4 and 5 provided in the light source covering section 3. Accordingly, in the head lamp 1 for a vehicle according to the embodiment, since it is unnecessary to increase the electric capacity of the position bulb 28, there is no possibility that the light source covering section 3 is deteriorated.

In particular, since the head lamp 1 for a vehicle according to the embodiment is structured such that the gaps 4 and 5 of the light source covering section 3 are constituted by one front face hole 4 and six side face holes 5, light output from the light source section 28a of the position bulb 28 is directly emitted from the front face hole 4 and the side face holes 5 so as to be used as a direct light, and is emitted from the side face holes 5 and reflected on the sub reflection surface 2 of the reflector 24 so as to be used as a secondary reflection light, respectively. Accordingly, the desired brightness can be securely obtained without increasing the electric capacity of the position bulb 28 at the time when the position bulb 28 is turned on.

The head lamp 1 for a vehicle according to the embodiment is structured such that the standing wall 6 is integrally provided in the reflector 24, and the standing wall 6 protrudes ahead of the light source covering section 3 so as to surround the light source coating section 3. As a result, since the head lamp 1 for a vehicle according to the embodiment can conceal at least the side face holes 5 of the light source covering section 3 from a field of view from an obliquely upper side of a person standing close to the front of the vehicle, with the help of the standing wall 6, an appearance at the time when the head lamp is turned off can be further improved.

In the head lamp 1 for a vehicle according to the embodiment, since the sub reflection surface 2 is provided in the periphery of the light source section 28a of the position bulb 28 on the reflection surface 25, it is possible to reflect light output from the light source section 28a of the position bulb 28 on the exclusive sub reflection surface 2. As a result, the head lamp 1 for a vehicle according to the embodiment can obtain a light distribution exclusive for the position bulb 28.

Since the head lamp 1 for a vehicle according to the embodiment is structured such that the sub reflection surface 3 is provided in the portion protruding ahead of the reflection surface 25, it is possible to sufficiently secure a space at the rear portion of the sub reflection surface 3.

Since the head lamp 1 for a vehicle according to the embodiment is structured such that the standing wall 60 which shields light is provided between the reflection surface 25 and the sub reflection surface 2, it is possible to shield light between the main bulb and the sub reflection surface 2, and between the position bulb 28 and the reflection surface 25, with the help of the standing wall 60 which shields light. As a result, in the head lamp 1 for a vehicle according to the embodiment, the light distribution obtained by the main bulb and the light distribution obtained by the position bulb 28 do not interfere and affect each other, and it is possible to secure the light distributions exclusive for the respective bulbs.

Since the head lamp 1 for a vehicle according to the embodiment is structured such that the standing wall 60 which shields light is integrally provided in the reflector and protrudes ahead of the light source covering section 3 so as to surround the light source covering section 3, it can be commonly used as the standing wall 6 which is integrally provided in the reflector and which protrudes ahead of the light source covering section 3 so as to surround the light source covering section 3. As a result, in the head lamp 1 for a vehicle according to the embodiment, the structure of the reflector 24 does not become complex.

Since the head lamp 1 for a vehicle according to the embodiment is structured such that the aluminum vapor deposition is applied to the surface of the light source covering section 3, in the same manner as that of the reflection surface 25 and the sub reflection surface 3, it is possible to obtain a sense of identity between the reflection surface 25 and the sub reflection surface 3, and the light source covering section 3.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A head lamp (1) for a vehicle provided with a main bulb (22) and a position bulb (28), comprising:
the main bulb (22);
a reflector (24) in which a reflection surface (25) which reflects light output from the main bulb (22) is formed and an opening (29) is provided;
a lamp housing (21) in which the reflector (24) is supported so as to be capable of adjusting an optical axis of the main bulb (22);
a position bulb (28) provided in the lamp housing (21) and having a light source section (28a) protruded forward from the opening (29),
a light source covering section (3) integrally provided in the reflector (24) and formed in a shape bulging forward so as to cover the light source section (28a) of the position bulb (28) and the opening (29), and
gaps (4,5) provided in the light source covering section (3);
**characterized in**
**that** the gaps (4,5) are constituted by one front face hole (4) provided in a top portion of the light source covering section (3), and a plurality of side face holes (5) provided in a side face portion of the light source covering section (3).

2. The head lamp (1) for a vehicle according to claim 1 **characterized in that** a standing wall (6) is integrally provided in the reflector (24), and the standing wall (6) protrudes ahead of the light source covering section (3) so as to surround the light source covering section (3).

3. The head lamp (1) for a vehicle according to claim 1 or 2, **characterized in that** a sub reflection surface (2) which reflects light output from the light source section (28a) of the position bulb (28) is provided in the periphery of the light source section (28a) of the position bulb (28).

4. The head lamp (1) for a vehicle according to claim 3, **characterized in that** the sub reflection surface (2) is provided in a portion protruding ahead of the reflection surface (25).

5. The head lamp (1) for a vehicle according to claim 3 or 4, **characterized in that** a standing wall (60) which shields light is provided between the reflection surface (25) and the sub reflection surface (2), and the standing wall (60) which shields light shields the light between the main bulb (22) and the sub reflection surface (2), and between the position bulb (28) and the reflection surface (25).

6. The head lamp (1) for a vehicle according to claim 5, **characterized in that** the standing wall (60) which shields light is integrally provided in the reflector (24), and protrudes ahead of the light source covering section (3) so as to surround the light source covering section (3).

7. The head lamp (1) for a vehicle according to any one of claims 1 to 6, **characterized in that** the reflection surface (25) and the sub reflection surface (2) are formed by an aluminum vapor deposition, and an aluminum vapor deposition is applied to a surface of the light source covering section (3).

## Patentansprüche

1. Fahrzeugscheinwerfer (1) mit einer Hauptlampe (22) und einer Positionslampe (28), wobei der Fahrzeugscheinwerfer umfasst:
die Hauptlampe (22);
einen Reflektor (24) ausgebildet mit einer von der Hauptlampe (22) ausgestrahltem Licht reflektierenden Reflexionsfläche (25) und vorgesehen mit einer Öffnung (29);
ein Scheinwerfergehäuse (21), in welchem der Reflektor (24) so gelagert ist, dass der Reflektor (24) eine Justierung einer optischen Achse der Hauptlampe (22) vornehmen kann;
eine Positionslampe (28), welche in dem Scheinwerfergehäuse (21) vorgesehen ist und einen von der Öffnung (29) vorwärts hervorragenden Lichtquellenabschnitt (28a) aufweist,
einen Lichtquellenabdeckabschnitt (3), welcher integral in dem Reflektor (24) vorgesehen und mit einer vorwärts aufgeweiteten Form ausgebildet ist, um den Lichtquellenabschnitt (28a) der Positionslampe (28) und der Öffnung (29) abzudecken, und
Aussparungen (4, 5), welche in dem Lichtquellenabdeckabschnitt (3) vorgesehen sind;
**dadurch gekennzeichnet,**
**dass** die Spalten (4, 5) durch eine in einem oberen Abschnitt des Lichtquellenabdeckabschnitts (3) vorgesehene Stirnflächenöffnung (4) und durch eine Mehrzahl an in einem Seitenflächenabschnitt des Lichtquellenabdeckabschnitts (3) vorgesehenen Seitenflächenöffnungen (5) ausgeformt werden.

2. Fahrzeugscheinwerfer (1) nach Anspruch 1 **dadurch gekennzeichnet, dass** eine stehende Wandung (6) integral in dem Reflektor (24) vorgesehen ist, und die stehende Wandung (6) über den Lichtquellenabdeckabschnitt (3) hinausragt, um den Lichtquellenabdeckabschnitt (3) einzufassen.

3. Fahrzeugscheinwerfer (1) nach Anspruch 1 oder 2 **dadurch gekennzeichnet, dass** eine Nebenreflexionsfläche (2), welche Licht von dem Lichtquellenabschnitt (28a) der Positionslampe (28) reflektiert, in der Peripherie des Lichtquellenabschnittes (28a) der Positionslampe (28) vorgesehen ist.

4. Fahrzeugscheinwerfer (1) nach Anspruch 3 **dadurch gekennzeichnet, dass** die Nebenreflexionsfläche (2) in einem von der Reflexionsfläche (25) hervorstehenden Abschnitt vorgesehen ist.

5. Fahrzeugscheinwerfer (1) nach Anspruch 3 oder 4 **dadurch gekennzeichnet, dass** eine lichtabschirmende stehende Wandung (60) zwischen der Reflexionsfläche (25) und der Nebenreflexionsfläche (25) vorgesehen ist, und die lichtabschirmende stehende Wandung (60) das Licht zwischen der Hauptlampe (22) und der Nebenreflexionsfläche (2) und zwischen der Positionslampe (28) und der Reflexionsfläche (25) abschirmt.

6. Fahrzeugscheinwerfer (1) nach Anspruch 5 **dadurch gekennzeichnet, dass** die lichtabschirmende stehende Wandung (60) integral in dem Reflektor vorgesehen ist und von dem Lichtquellenabdeckabschnitt (3) hervorragt, um den Lichtquellenabdeckabschnitt (3) einzufassen.

7. Fahrzeugscheinwerfer (1) nach einem der Ansprüche 1 bis 6, **dadurch gekennzeichnet, dass** die Reflexionsfläche (25) und die Nebenreflexionsfläche (2) aus einer Aluminium-Bedampfung ausgebildet sind, und eine Aluminium-Bedampfung auf eine Oberfläche des Lichtquellenabdeckabschnittes (3) aufgetragen ist.

## Revendications

1. Phare (1) pour un véhicule muni d'une ampoule principale (22) et d'une ampoule de position (28), comprenant :
l'ampoule principale (22) ;
un réflecteur (24) dans lequel une surface de réflexion (25) qui réfléchit de la lumière émise à partir de l'ampoule principale (22) est formée et une ouverture (29) est agencée ;
un boîtier d'ampoule (21) dans lequel le réflecteur (24) est supporté de manière à être apte à régler un axe optique de l'ampoule principale (22) ;
une ampoule de position (28) agencée dans le boîtier d'ampoule (21) et ayant une section de source lumineuse (28a) faisant saillie vers l'avant à partir de l'ouverture (29),
une section de recouvrement de source lumineuse (3) agencée d'un seul tenant dans le réflecteur (24) et formée dans une forme bombée vers l'avant de manière à recouvrir la section de source lumineuse (28a) de l'ampoule de position (28) et l'ouverture (29), et
des espaces (4, 5) prévus dans la section de recouvrement de source lumineuse (3) ;
**caractérisé en ce que** les espaces (4, 5) sont constitués par un trou de face avant (4) agencé dans une partie supérieure de la section de recouvrement de source lumineuse (3), et par de multiples trous de face latérale (5) agencés dans une partie de face latérale de la section de recouvrement de source lumineuse (3).

2. Phare (1) pour un véhicule selon la revendication 1, **caractérisé en ce qu'**une paroi verticale (6) est agencée d'un seul tenant dans le réflecteur (24), et la paroi verticale (6) fait saillie devant la section de recouvrement de source lumineuse (3) de manière à entourer la section de recouvrement de source lumineuse (3).

3. Phare (1) pour un véhicule selon la revendication 1 ou 2, **caractérisé en ce qu'**une surface de réflexion secondaire (2), qui réfléchit de la lumière émise à partir du tronçon de source lumineuse (28a) de l'ampoule position (28), est agencée dans la périphérie de la section de source lumineuse (28a) de l'ampoule de position (28).

4. Phare (1) pour un véhicule selon la revendication 3, **caractérisé en ce que** la surface de réflexion secondaire (2) est agencée dans une partie faisant saillie devant la surface de réflexion (25).

5. Phare (1) pour un véhicule selon la revendication 3 ou 4, **caractérisé en ce qu'**une paroi verticale (60) qui protège de la lumière est agencée entre la surface de réflexion (25) et la surface de réflexion secondaire (2), et la paroi verticale (60) qui protège de la lumière protège de la lumière entre l'ampoule principale (22) et la surface de réflexion secondaire (2), et entre l'ampoule de position (28) et la surface de réflexion (25).

6. Phare (1) pour un véhicule selon la revendication 5, **caractérisé en ce que** la paroi verticale (60) qui protège de la lumière est agencée d'un seul tenant dans le réflecteur (24), et fait saillie devant la section de recouvrement de source lumineuse (3) de manière à entourer la section de recouvrement de source lumineuse (3).

7. Phare (1) pour un véhicule selon l'une quelconque des revendications 1 à 6, **caractérisé en ce que** la surface de réflexion (25) et la surface de réflexion secondaire (2) sont formées par un dépôt d'aluminium en phase vapeur, et un dépôt d'aluminium en phase vapeur est appliqué sur une surface de la section de recouvrement de source lumineuse (3).
